(19) Europäisches Patentamt
European Patent Office
Office européen des brevets

(11) **EP 4 012 160 A1**

(12) **EUROPEAN PATENT APPLICATION**

(43) Date of publication:
**15.06.2022 Bulletin 2022/24**

(21) Application number: **20213606.5**

(22) Date of filing: **11.12.2020**

(51) International Patent Classification (IPC):
*F01D 21/00* (2006.01)      *G01B 5/20* (2006.01)
*G01B 5/30* (2006.01)      *G01M 15/14* (2006.01)

(52) Cooperative Patent Classification (CPC):
**F01D 21/003; G01M 15/14;** F05D 2260/80;
F05D 2270/11; G01B 21/32

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ansaldo Energia Switzerland AG 5400 Baden (CH)**

(72) Inventors:
• **SISTANINIA, Meisam**
  **5200 BRUGG (AG) (CH)**
• **WINGE, Torsten**
  **5408 ENNETBADEN (CH)**
• **IVKOVIC, Sinisa**
  **5340 WETTINGEN (AG) (CH)**

(74) Representative: **Bernotti, Andrea et al**
  **Studio Torta S.p.A.**
  **Via Viotti, 9**
  **10121 Torino (IT)**

(54) **METHOD FOR ESTIMATING THE CONSUMED LIFE OF A ROTATING COMPONENT**

(57) The method for estimating the consumed life of a rotating component comprises providing an initial component lifetime, providing a first relationship between local creep elongations measured at multiple locations (10, 11, 12, 13) of the component (6) and a combined creep elongation, which is indicative of the local creep elongations substantially irrespective of the operating conditions, measuring the local creep elongations at the multiple locations of the component, based on the measured local creep elongations, calculating the combined creep elongation, providing a second relationship between the combined creep elongation and a consumed life, estimating based on the second relationship and the calculated combined creep elongation the consumed life.

Fig. 1

**Description**

TECHNICAL FIELD

The present invention relates to a method for estimating the consumed life of a rotating component.

The rotating component is part of a rotating machine, particularly a large rotating machine such as a gas turbine, a steam turbine, a turbogenerator, a hydro generator or the like.

BACKGROUND

In the following particular reference to a rotating machine such as a gas turbine is made; similar considerations are anyway applicable to other kinds of rotating machines, such as steam turbines, turbogenerators or hydro generators, etc.

Gas turbines have a compressor, a combustion chamber and a turbine; the compressor and the turbine have a plurality of stages, each comprising vanes and rotor blades. The rotor blades are connected to and supported by a rotor. Often gas turbines have one rotor that extends from the compressor to the turbine, other configurations with separate rotors for the compressor and the turbine are anyhow possible.

During operation the rotor undergoes degradation, because of thermal and mechanical stress. In order to monitor this degradation, typically a lifetime for the rotor (i.e. the maximum life the rotor can operate) is defined and the rotor life consumed due to the operation is calculated. When the rotor lifetime is completely consumed, the rotor is dispensed with and is replaced.

The consumed rotor life depends on a number of factors, mainly the rotor temperature and load. As a reference for the rotor temperature, the ambient temperature and/or the temperature of the gas circulating through the gas turbine (compressed air or hot gas) can be taken.

Traditionally, in order to calculate the rotor life consumed during operation, the temperature of the gas circulating through the gas turbine is measured (compressed air and/or hot gas temperature), thus based on the gas temperature the rotor metal temperature is calculated; then based on assumed material properties, the consumed life is calculated.

However, this traditional method relies on assumptions on the relationship between the gas temperature (compressed air and hot gas) and the rotor temperature and on assumptions on the relationship between the rotor temperature and the consumed rotor life. Additional assumptions on the rotor material properties are also required. All those assumptions must be made considering the worst conditions, therefore, the consumed rotor life estimated according to these traditional methods proved to be very conservative.

SUMMARY

An aspect of the invention includes providing a method for estimating the consumed life of a rotating component that does not rely on assumptions e.g. on the relationship between gas temperature and rotor temperature or rotor temperature and consumed rotor life or also rotor material properties, but is based on multiple measurements of local creep elongations.

Advantageously, the local creep elongations can provide information on the history of the rotor operation including thermal stress (linked to the ambient temperature and load, which are in turn linked to the compressed air temperature and hot gas temperature) and/or on the rotor mechanical stress (centrifugal forces and torque) and/or on the material properties, without the need of any assumptions, which may be incorrect.

Advantageously the method of the invention is more precise than traditional methods.

These and further aspects are attained by providing a method in accordance with the accompanying claims.

BRIEF DESCRIPTION OF THE DRAWINGS

Further characteristics and advantages will be more apparent from the description of a preferred but non-exclusive embodiment of the method, illustrated by way of nonlimiting example in the accompanying drawings, in which:

Figure 1 shows an example of a gas turbine implementing the method of the invention;

Figure 2 is a graphical representation of a second relationship linking a combined creep elongation to the rotor consumed life.

DETAILED DESCRIPTION OF EXEMPLARY EMBODIMENTS

The component is preferably a rotor of a rotating machine and the rotating machine is e.g. a gas turbine and/or a steam turbine and/or a turbogenerator and/or a hydro generator. In the following reference to a gas turbine is made.

With reference to the figures, these show a gas turbine 1 with a compressor 2, a combustion chamber 3 and a turbine 4. The compressor 2 and turbine 4 are connected to a rotor 6.

References 10, 11, 12, 13 indicate different locations (reference cross sections of the rotor 6) that are referred to for the implementation of the method. Clearly the reference locations or cross sections can be selected according to the requirements, but preferably they can include a first cross section 10 at an intermediate axial position of the compressor 2, a second cross section 11 at the outlet of the compressor 2, a third cross section 12 in correspondence of the combustor 3, a fourth cross section 13 at the inlet of the turbine 4.

Reference to these definitions will be made in the following:

- creep strain: punctual deformation at any position (i.e. at a generic position) of the component, this is a material property;
- limit creep strain: maximum allowed creep strain at any position (i.e. at a generic position) of the component, when the creep strain reaches the limit creep strain at any position of the component (i.e. at a generic position), the component lifetime is considered completely consumed;
- local creep elongation: radial permanent deformation or creep elongation at a given cross section of the component; it is generally dependent from the temperature (ambient temperature, gas temperature) and the load;
- combined creep elongation: value calculated by the given formula and which is indicative of the local creep elongations as a whole and is thus indicative of the stress caused by the component material temperature (dependant from the ambient temperature and load), mechanical stress and also material properties. The combined creep elongation is ideally independent from the operating conditions of the component, e.g. it is independent from temperatures and load.

In order to estimate the residual life of the component, the component lifetime is defined first.

The component lifetime is the maximum life allowed for the component; the lifetime is consumed during operation and when it is completely consumed the component is replaced. The lifetime is a given value; for example it can be predefined in advance as a guaranteed number of hours for the component or it can be an equivalent number of hours for a new component under ISO conditions (i.e. a given number of hours for a component operating at given conditions); in the following reference to e.g. 120000 hours for a new gas turbine rotor is made. The lifetime of an already used component is generally lower than the lifetime of a new component, and e.g. it can be the original lifetime (i.e. the lifetime of the new component) reduced by the consumed life due to previous operations.

The method comprises providing a first relationship between local creep elongations measured at multiple locations of the component and a combined creep elongation, which is indicative of the component creep elongations substantially irrespective of the operating conditions.

The operation of the component causes local creep elongations, which in general depend from the operating conditions, such as gas temperature (ambient temperature or temperature of the gas through the gas turbine, for example air temperature at the outlet of the compressor and/or hot gas temperature at the inlet or outlet of the turbine) and load. The combined creep elongation is linked to the local creep elongations independently from the operating conditions, i.e.:

- different operating conditions result in different local creep elongations, but

- same local creep elongations result substantially in the same combined creep elongation, independently from the operating conditions that have caused the local creep elongations.

In this respect, "substantially" means that some play is allowed according to the required precision; this play can be reduced by increasing the number of measurements of local creep elongations. For example, combined creep elongations calculated at different operating conditions may be in a range of $\pm 10\%$ or $\pm 5\%$ or $\pm 3$ or $\pm 7\%$ or $\pm 4\%$ or $\pm 2$ of a reference combined creep elongation. It was found that with up to three measurements of local creep elongations, the combined creep elongation lies in a range of $\pm 10\%$ or $\pm 5\%$ or $\pm 3$ of the reference combined creep elongation, while four or more measurements of local creep elongations allow the calculation of a combined creep elongation that lies in a range $\pm 7\%$ or $\pm 4\%$ or $\pm 2\%$ of the reference combined creep elongation.

Thus, according to the method the local creep elongations are measured at the multiple locations of the component, like for example at the cross sections 10 through 13.

Based on the measured local creep elongations, the combined creep elongation can be calculated.

A second relationship between the combined creep elongation and a consumed life of the component is thus provided and, based on this second relationship and the calculated combined creep elongation, the consumed life is calculated.

Once the consumed life is known, the residual component life can be calculated, based on the initially defined lifetime and the consumed life.

The first relationship is preferably a linear equation such as

$$\Delta S = \Sigma \, a_i \, Ur_i \, (T, Load)$$

wherein:

- $\Delta S$: is the combined creep elongation;
- $a_i$: are coefficients;
- $Ur_i$ (T, Load): are the local creep elongations, which are a function of the operating conditions, such as temperature (ambient temperature and/or gas temperature, etc.) and load.

The coefficients $a_i$ are calculated considering that, after operating the component for a time equal to the lifetime at different operating conditions, the consumed life must always be equal to the lifetime.

Thus, a plurality of operating conditions for the component are defined first, e.g. the ambient temperature and load are set; likewise the lifetime is provided, e.g. 120000 hours.

Thus, the local creep elongations at the different locations are determined, assuming that the component has operated for a time equal to its lifetime. For example the local creep elongations can be measured on already existing components or can be calculated using a simulation software. Measurements or calculations are carried out for each of the operating conditions at the predefined lifetime, e.g. after 120000 hours of operation.

The reference combined creep elongation is thus provided; such a reference combined creep elongation may be any and its specific value does not change the result of the consumed component life estimation, because it only defines a numerical reference value for the combined creep elongation after operation of the component for its whole lifetime.

Therefore, the coefficients of the linear equation can be calculated using the measured or calculated local creep elongations and the reference combined creep elongation.

The second relationship is defined considering that, at the end of the component life the creep strain at a generic position of the component reaches the limit creep strain. Thus, a condition indicating the end of the component life based on a component creep strain is defined and a plurality of operating conditions for the component are also provided.

The component creep strain and the local creep elongations for each of the operating conditions are thus calculated with a simulation software during operation of the component up to the end of its lifetime.

The consumed life can thus be linked to the creep strain and thus to the local creep elongations and therefore to the combined creep elongation.

This second relationship can be provided as graphical representation or as a look up table or an equation or a function.

Preferably, the local creep elongations are measured during service, when the rotor is extracted from the rotating machine. This allows an easy and precise measurement of the local creep elongations.

EXAMPLE 1

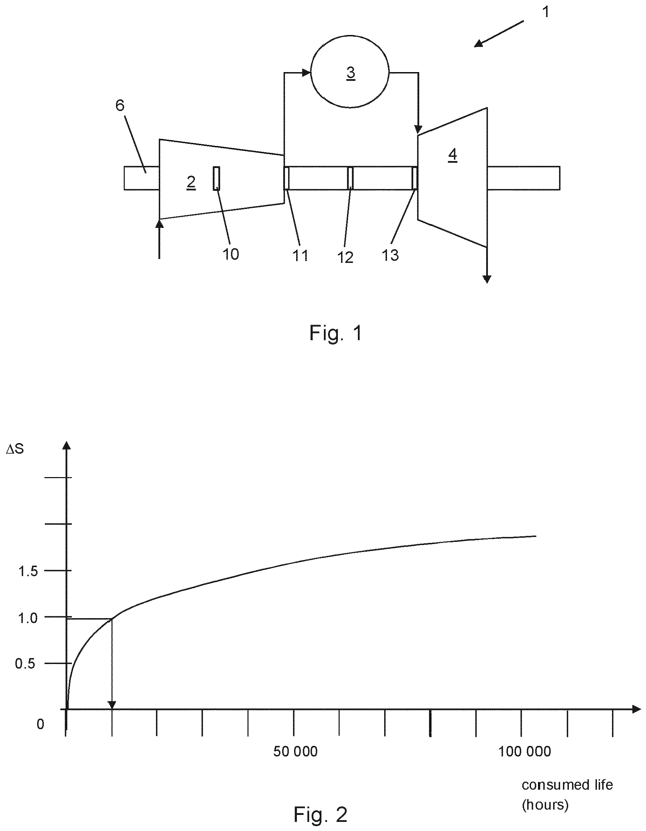

In the following an example of a calculation according to the method of the invention is explained. Reference to a rotor of a gas turbine is made; with reference to figure 1, the local creep elongations are measured at locations 10 through 13. The method is typically implemented during service, when the rotor is extracted from the casing. It is anyhow clear that the method can also be implemented during rotor operation, by online measuring the local creep elongations.

The initial lifetime of the component is defined first; considering the component a new rotor at its first operation, the lifetime is generally made 120000 hours.

Thus, the first relationship with reference to locations 10 through 13 is provided. As an example the first relationship can be

$$\Delta S = 17 \, Ur_{10} - 33 \, Ur_{11} + Ur_{12} + Ur_{13}$$

where $Ur_{10}$, $Ur_{11}$, $Ur_{12}$, $Ur_{13}$ are the local creep elongations measured respectively at the locations (i.e. cross sections) 10, 11, 12, 13.

The local creep elongations are thus measured, e.g. with results in the below table:

| Location 10 | Location 11 | Location 12 | Location 13 |
|---|---|---|---|
| 0.07 mm | 0.029 mm | 0.33 mm | 0.39 mm |

The combined local creep elongation is thus calculated, and with the above figures it can be obtained

$$\Delta S = 0.95 \text{ mm}.$$

Then, with reference to the second relationship, the consumed life can be calculated. Figure 2 reproduces an example of a second relationship in graphic form; from this figure it can be derived that for a combined creep elongation of 0.95 mm, the consumed life is 10000 hours.

Once the consumed life is known, also the residual component life can be calculated as the difference between the lifetime and the consumed life; in the present example the residual component life is 110000 hours.

EXAMPLE 2

In the following an example of determination of the first relationship is described. The first relationship is in the form

$$\Delta S = \Sigma\, a_i\, Ur_i\, (T, Load).$$

Calculation is made with reference to four cross sections 10 through 13.

In order to calculate the coefficients $a_i$, a limit creep strain of 1% is defined as the condition indicating the end of the life of the component and a component lifetime of 120000 hours is e.g. set.

Then a number of operating conditions is defined; since four coefficients have to be determined, four operating conditions are provided. Generally a number of operating conditions being same as the number of coefficients is required. In case the number of operating conditions is larger than the number of coefficients, a regression analysis is also required. In the present case four operating conditions are provided, as e.g. exemplified in the below table:

|  | Operating condition 1 | Operating condition 2 | Operating condition 3 | Operating condition 4 |
|---|---|---|---|---|
| Ambient temperature | 15 °C | 35 °C | 20 °C | 0 °C |
| load | full load | full load | part load (80%) | part load (60%) |

Based on the operating condition set, the local creep elongations at the different locations 10 through 13 for each of the operating conditions are calculated or measured (if data e.g. for similar components, which have operated through their whole lifetime are available); calculation or measurement is made considering that the component has operated for its whole lifetime (i.e. 120000 hours). The Calculation can be done using the software for finite element analysis Abaqus of ABAQUS Inc.

The following data can thus be calculated:

|  | Local creep elongation at location 10 | Local creep elongation at location 11 | Local creep elongation at location 12 | Local creep elongation at location 13 |
|---|---|---|---|---|
| Operating condition 1 | $Ru_{1,10}$ | $Ru_{1,11}$ | $RU1,12$ | $RU1,13$ |
| Operating condition 2 | $Ru_{2,10}$ | $RU2,11$ | $RU2,12$ | $RU2,13$ |
| Operating condition 3 | $RU3,10$ | $RU3,11$ | $RU3,12$ | $RU3,13$ |

(continued)

| | Local creep elongation at location 10 | Local creep elongation at location 11 | Local creep elongation at location 12 | Local creep elongation at location 13 |
|---|---|---|---|---|
| Operating condition 4 | RU4,10 | RU4,11 | RU4,12 | RU4,13 |

where $Ru_{1,10}$ through $Ru_{4,13}$ are the calculated or measured numerical values.

Thus, a reference combined creep elongation $\Delta s$ is provided; for example this reference combined creep elongation is set at 2 mm (the dimension of $\Delta s$ is a length because of the way it is calculated, but it does not have physical implications).

Therefore, the coefficients $a_i$ can be calculated by solving the system of equations

$$\Delta s = a_1 Ru_{1,10} + a_2 Ru_{1,11} + a_3 Ru_{1,12} + a_4 Ru_{1,13}$$

$$\Delta s = a_1 Ru_{2,10} + a_2 Ru_{2,11} + a_3 Ru_{2,12} + a_4 Ru_{2,13}$$

$$\Delta s = a_1 Ru_{3,10} + a_2 Ru_{3,11} + a_3 Ru_{3,12} + a_4 Ru_{3,13}$$

$$\Delta s = a_1 Ru_{4,10} + a_2 Ru_{4,11} + a_3 Ru_{4,12} + a_4 Ru_{4,13}$$

Considering that $\Delta s$ is same for all operating conditions (because by definition it is independent or substantially independent from the operating conditions) and is the one provided, e.g. 2 mm.

EXAMPLE 3

In the following an example of determination of the second relationship is described.

First a limit creep strain of e.g. 1% is set as defining the end of the component life. Thus, a life consumption is defined e.g. 10000 hours.

Also here, operating conditions are defined and, as done in example 2, the local creep elongation and creep strain through the component are calculated using a simulation software, after operation of the component at the given operating conditions for the predefined life consumption; different simulation software products are available on the marked, such as Abaqus of ABAQUS Inc.

The calculation is repeated a number of times for different life consumption values, e.g. for cycles of 10000 hours from 0 to 120000 hours (component lifetime).

Finally, the consumed component life is linked to the local creep elongations and thus (using the first relationship) to combined creep elongation; figure 2 shows a diagram representing the second relationship.

Advantageously, the method in implemented via a software.

Naturally the features described may be independently provided from one another.

In practice the materials used and the dimensions can be chosen at will according to requirements and to the state of the art.

**Claims**

1. A method for estimating the consumed life of a rotating component comprising:

   - providing a component lifetime,
   - providing a first relationship between local creep elongations measured at multiple locations of the component and a combined creep elongation, which is indicative of the local creep elongations substantially irrespective of the operating conditions,
   - measuring the local creep elongations at the multiple locations of the component,
   - based on the measured local creep elongations, calculating the combined creep elongation,

- providing a second relationship between the combined creep elongation and a consumed life,
- estimating based on the second relationship and the calculated combined creep elongation the consumed life.

2. The method of claim 1, **characterized in that** the first relationship is a linear equation.

3. The method of claim 2, **characterized in that** the linear equation is

$$\Delta S = \sum a_i \, Ur_i \, (T)$$

wherein: $\Delta S$: is the combined creep elongation; $a_i$: are coefficients; $Ur_i$: are the local creep elongations.

4. The method of claim 2 or 3, **characterized in that** the coefficients are calculated by:

   - providing a plurality of operation conditions for the component,
   - measuring or calculating with a simulation software the local creep elongations at the multiple locations for each of the operating conditions after operating the component for its whole lifetime,
   - providing a reference combined creep elongation,
   - calculating the coefficients of the linear equation using the measured or calculated local creep elongations and the reference combined creep elongation.

5. The method of any of the previous claims, **characterized in that** the combined creep elongations calculated at different operating conditions are in a range of $\pm 10\%$ or $\pm 5\%$ or $\pm 3$ or $\pm 7\%$ or $\pm 4\%$ or $\pm 2$ of the reference combined creep elongation.

6. The method of any of the previous claims, **characterized in that** the second relationship is defined by

   - defining a condition indicating the end of the component life based on a component creep strain,
   - providing a plurality of operation conditions for the component,
   - calculating with a simulation software the component creep strain and the local creep elongations for each of the operating conditions during component operation up to the end of its lifetime,
   - linking the consumed life to the local creep elongations and therefore to the combined creep elongation.

7. The method of claim 6, **characterized in that** the condition defining the end of the component life is defined by the creep stain reaching of a limit creep strain.

8. The method of any of claims 6 or 7, **characterized in that** the second relationship is provided as graphical representation or as a look up table or an equation or a function.

9. The method of any of the previous claims, **characterized in that** the component is a rotor of a rotating machine.

10. The method of claim 9, **characterized in that** the operating conditions comprise a gas temperature and/or a rotating machine load.

11. The method of claim 10, **characterized in that** the temperature is the ambient temperature and/or a temperature of the gas circulating through the rotating machine.

12. The method of any of claims 9 through 11, **characterized in that** the rotating machine is a gas turbine and/or a steam turbine and/or a turbogenerator and/or a hydro generator.

13. The method of any of claims 9 through 12, **characterized in that** the local creep elongations are measured during service, when the rotor is extracted from the rotating machine.

14. The method of any of the previous claims, **characterized by** calculating the residual life based on the initial lifetime and the consumed life.

15. A computer readable medium stored and/or running on a computer comprising instructions implementing a method according to any of claims 1 through 14.

Fig. 1

Fig. 2

Europäisches
Patentamt

European
Patent Office

Office européen
des brevets

# EUROPEAN SEARCH REPORT

**Application Number**

EP 20 21 3606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 078 946 A2 (GEN ELECTRIC [US]) 15 July 2009 (2009-07-15) | 1,14,15 | INV. F01D21/00 |
| Y | * paragraphs [0006] - [0010], [0020] - [0022], [0026], [0030] - [0042]; figures 1-7 * | 7,9-12 | G01B5/20 G01B5/30 G01M15/14 |
| X | US 9 494 490 B2 (TRALSHAWALA NILESH [US]; MILLER HAROLD EDWARD [US] ET AL.) 15 November 2016 (2016-11-15) | 1,14,15 | |
| Y | * claims 1-8; figures 1-9 * | 7-12 | |
| Y | DE 36 20 355 A1 (GEN ELECTRIC [US]) 2 January 1987 (1987-01-02)<br><br>* columns 3-10; figures 1-6 * | 1,2, 7-12,14, 15 | |
| Y | US 2010/236333 A1 (ARAI MASAHIKO [JP] ET AL) 23 September 2010 (2010-09-23) * paragraphs [0006] - [0012]; figures 1-5 * | 1,2,7,8, 13,14 | |
| Y | JP H10 293049 A (TOSHIBA CORP) 4 November 1998 (1998-11-04)<br><br>* abstract; figures 4,6,9-11 * | 1,2, 7-12,14, 15 | TECHNICAL FIELDS SEARCHED (IPC)<br><br>F01D G01B G01M |
| Y | JP 2013 130494 A (HITACHI LTD) 4 July 2013 (2013-07-04) * abstract; figures 1-5 * | 1,2,8, 12,14 | |
| Y | US 2004/139809 A1 (SOECHTING FRIEDRICH [US] ET AL) 22 July 2004 (2004-07-22) * paragraphs [0041] - [0047]; figures 1,4 * | 1,7,9, 12-14 | |

The present search report has been drawn up for all claims

| Place of search | Date of completion of the search | Examiner |
|---|---|---|
| Munich | 20 April 2021 | Koch, Rafael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 21 3606

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2021

| Patent document cited in search report | | Publication date | Patent family member(s) | | Publication date |
|---|---|---|---|---|---|
| EP 2078946 | A2 | 15-07-2009 | CN | 101482034 A | 15-07-2009 |
| | | | EP | 2078946 A2 | 15-07-2009 |
| | | | JP | 5264517 B2 | 14-08-2013 |
| | | | JP | 2009168020 A | 30-07-2009 |
| | | | US | 2009178417 A1 | 16-07-2009 |
| US 9494490 | B2 | 15-11-2016 | CH | 706827 A2 | 14-02-2014 |
| | | | CN | 103592053 A | 19-02-2014 |
| | | | DE | 102013108738 A1 | 20-02-2014 |
| | | | JP | 6204743 B2 | 27-09-2017 |
| | | | JP | 2014051971 A | 20-03-2014 |
| | | | US | 2014052410 A1 | 20-02-2014 |
| DE 3620355 | A1 | 02-01-1987 | CN | 86103018 A | 17-12-1986 |
| | | | DE | 3620355 A1 | 02-01-1987 |
| | | | FR | 2583875 A1 | 26-12-1986 |
| | | | JP | S6285839 A | 20-04-1987 |
| US 2010236333 | A1 | 23-09-2010 | AU | 2010200506 A1 | 07-10-2010 |
| | | | CA | 2693045 A1 | 19-09-2010 |
| | | | JP | 4750868 B2 | 17-08-2011 |
| | | | JP | 2010223624 A | 07-10-2010 |
| | | | KR | 20100105373 A | 29-09-2010 |
| | | | US | 2010236333 A1 | 23-09-2010 |
| JP H10293049 | A | 04-11-1998 | NONE | | |
| JP 2013130494 | A | 04-07-2013 | JP | 5506771 B2 | 28-05-2014 |
| | | | JP | 2013130494 A | 04-07-2013 |
| US 2004139809 | A1 | 22-07-2004 | CN | 101105429 A | 16-01-2008 |
| | | | US | 2004139809 A1 | 22-07-2004 |

EPO FORM P0459

For more details about this annex : see Official Journal of the European Patent Office, No. 12/82